Europäisches Patentamt

European Patent Office

Office européen des brevets

(19)

(11) Numéro de publication : **0 587 468 A2**

## (12) DEMANDE DE BREVET EUROPEEN

(21) Numéro de dépôt : **93402023.1**

(22) Date de dépôt : **06.08.93**

(51) Int. Cl.⁵ : **H04L 12/18, H04Q 11/00**

(30) Priorité : **07.08.92 IT MI921959**

(43) Date de publication de la demande :
**16.03.94 Bulletin 94/11**

(84) Etats contractants désignés :
**AT BE CH DE ES FR GB LI NL SE**

(71) Demandeur : **ALCATEL N.V.**
**Strawinskylaan 341, (World Trade Center)**
**NL-1077 XX Amsterdam (NL)**
(84) **BE CH DE ES GB NL SE AT**

(71) Demandeur : **ALCATEL CIT**
**12 Rue de la Baume**
**F-75008 Paris (FR)**
(84) **FR**

(71) Demandeur : **ALCATEL ITALIA S.p.A.**
**Via L. Bodio, 33/39**
**I-20158 Milano (IT)**
(84) **AT BE CH DE ES FR GB LI NL SE**

(72) Inventeur : **Masetti Francesco**
**c/o Alcatel Alsthom Recherche**
**Route de Nozay F-91460 Marcoussis (FR)**
Inventeur : **Jacob Jean-Baptiste**
**2, rue Kertanguy - St-Quay-Perros**
**F-22700 Perros-Guirec (FR)**

(74) Mandataire : **Sciaux, Edmond et al**
**c/o SOSPI, 14-16 rue de la Baume**
**F-75008 Paris (FR)**

(54) **Réseau de connexion photonique permettant une diffusion.**

(57)    Pour permettre de diffuser un paquet de données d'une entrée (I1) vers plusieurs sorties (01,
02, 03, 06), le réseau de connexion comporte,
dans chaque plan de commutation, au moins un
étage (S2) constitué de commutateurs élémentaires (SE4, SE5, SE6) ayant au moins la capacité :
    — de router plusieurs exemplaires d'un
paquet ayant été multiplié en amont (SE1) ;
    — de multiplier un paquet, en le réémettant
plusieurs fois successivement sur une même
sortie ; les exemplaires ainsi créés étant routés
ensuite par les commutateurs élémentaires
(SE7, SE8, SE9) d'un étage (S3) situé en aval.
    Application aux centres de commutation ATM
photoniques.

FIG. 4

EP 0 587 468 A2

L'invention concerne un réseau de connexion photonique permettant une diffusion d'informations mises sous la forme de paquets de longueur quelconque, par exemple des cellules ayant une longueur fixe et qui sont conformes à la norme de transmission par multiplexage temporel asynchrone (ATM).

Une diffusion temporelle consiste à multiplier le nombre d'exemplaires d'un paquet, en les émettant en série. Une diffusion spatiale consiste à multiplier le nombre d'exemplaires d'un paquet, en les émettant sur des chemins parallèles, avec ou sans un petit décalage temporel.

On connaît des réseaux de connexion, réalisés en technologie électronique, permettant la diffusion spatiale de telles cellules. Par exemple, l'article : Design of a broadcast packet switching network, par Jonathan S. Turner, IEEE transactions On Communications vol 36 n°6 June 1988 décrit un commutateur de paquets, comportant :

- un premier étage constitué d'un processeur de paquets pour chaque entrée du réseau de connexion, adjoignant à chaque cellule une étiquette de routage interne;
- un réseau de copie, fournissant sur ses sorties c copies d'un paquet lorsque celui-ci a c destinations;
- des traducteurs de groupe et de diffusion, associés respectivement aux sorties du réseau de copie, pour déterminer un numéro de sortie du réseau de connexion, pour chaque paquet sortant du réseau de copie en fonction de son numéro de canal de diffusion et en fonction de données de routage stockées dans ces traducteurs;
- un réseau de distribution et un réseau de routage, reliés en séries, pour transférer les paquets fournis par les traducteurs de groupe et de diffusion vers les sorties du réseau de connexion qui constituent les destinations de ces cellules;
- les mêmes processeurs de paquets associés respectivement aux sorties du réseau de routage pour éliminer l'étiquette associée à chaque paquet d'informations, avant de restituer ce paquet sur une sortie du réseau de connexion.

Le réseau de copie, le réseau de distribution et le réseau de routage fonctionnent à un rythme de 25 Mb/s et comportent des chemins de données transmettant huit bits simultanément pour permettre l'utilisation d'une technologie électronique.

L'étiquette associée à chaque paquet d'informations comprend trois champs :

- un champ indiquant le type du paquet d'informations: paquet de commande de connexion, paquet de transfert de données, ou paquet datagramme;
- un numéro de canal logique indiquant la connexion à laquelle appartient ce paquet;
- un champ identificateur de source, indiquant l'entrée du réseau de connexion ayant reçu le paquet dans le réseau de connexion;
- un champ de routage constitué de trois parties : une première partie indique le type de routage en distinguant essentiellement la diffusion et les autres types de routage; une deuxième et une troisième parties dont l'interprétation dépend de la valeur de la première partie.

Pour des paquets appartenant à une connexion de point à point, le champ de routage contient un numéro de sortie ou de groupe de sorties du réseau de connexion, et un numéro de canal logique. Pour les paquets destinés à être diffusés, le champ de routage contient: un facteur de multiplication qui est le nombre de destinations auxquelles le même paquet est destiné; et un numéro de canal de diffusion, permettant de distinguer ce canal parmi tous les autres canaux de diffusion dans le réseau de connexion.

Le routage d'un paquet dans le réseau de connexion est déterminé par une traduction du numéro de canal logique, au moyen d'une table de traduction de canal logique, dans le processeur de paquets situé à l'entrée ayant reçu le paquet considéré. Le numéro de canal logique est utilisé comme adresse de cette table de traduction. Une lecture à cette adresse fournit le champ de routage pour constituer l'étiquette qui est adjointe au paquet par le processeur de paquets. Le contenu de cette table est mis à jour par un processeur de connexion chaque fois qu'une nouvelle connexion est établie.

Chaque processeur de paquets traite les paquets entrant par une entrée du réseau de connexion et les paquets sortant par une sortie du réseau de connexion ayant le même rang que cette entrée. Les paquets entrant sont sous la forme d'un signal optique modulé par une suite binaire. Le processeur de paquets convertit ce signal en huit signaux électriques binaires parallèles. Le processeur de paquets réalise la conversion inverse pour les paquets sortant, et il supprime l'étiquette de routage interne, contenant les champ de routage, de commande et de source.

Quand un paquet est destiné à être diffusé vers c destinations, le réseau de copie lit la valeur c du facteur de multiplication, dans l'étiquette du paquet, et il transfère ce paquet sur c sorties de ce réseau de copie. Ce réseau de copie est constitué de plusieurs étages de commutateurs élémentaires n'ayant chacun que deux sorties. Chaque commutateur élémentaire qui reçoit un paquet ne peut réémettre que deux copies de ce paquet. Par exemple un réseau de copie ayant 16 entrées comporte quatre étages de huit commutateurs élémentaires pour pouvoir diffuser un paquet vers l'ensemble des 16 sorties. Le réseau de copie ne peut que multiplier le nombre de copies d'un paquet, et ne peut pas simultanément effectuer le routage de ces paquets, car les possibilités de sélection des sorties de chaque commutateur élémentaire sont très limitées et sont déjà utilisées pour dupliquer éventuellement chaque paquet arrivant sur ce commutateur élémentaire.

Le routage de chaque copie d'un paquet vers la sortie du réseau de connexion à laquelle il est destiné est réalisé par le réseau de distribution et le réseau de routage, au moyen d'une nouvelle valeur du champ de routage, placée dans l'étiquette du paquet par le traducteur de groupe et de diffusion qui est situé sur chacune des sorties du réseau de copie. Chacun de ces traducteurs contient une table de traduction de diffusion qui est adressée par le numéro de canal de diffusion contenu dans le paquet arrivant au traducteur. Les informations lues à cette adresse sont insérées dans l'étiquette du paquet, à la place des informations de diffusion et de routage qui ont été utilisées dans le réseau de copie.

Les progrès de la technologie photonique permettent d'envisager la réalisation d'un réseau de connexion comportant des commutateurs élémentaires réalisés entièrement, ou presque entièrement, en technologie photonique. La réalisation d'un réseau de connexion permettant la diffusion de paquets d'informations, selon la structure décrite ci-dessus, mais avec des commutateurs élémentaires réalisés en technologie photonique, ne serait pas optimale compte tenu des capacités de la technologie photonique. Le but de l'invention est donc de proposer un réseau de connexion réalisé en technologie photonique permettant la diffusion, et ayant une structure plus simple que celle des réseaux de connexion de types connus permettant la diffusion.

L'objet de l'invention est un réseau de connexion photonique pour acheminer des paquets d'informations, entre une pluralité d'entrées et une pluralité de sorties, comportant au moins un étage de commutation constitué d'au moins un commutateur élémentaire ayant la capacité d'acheminer un paquet en fonction d'une étiquette de routage interne associée à cet paquet;

caractérisé en ce que pour diffuser un paquet d'une entrée vers plusieurs sorties du réseau de connexion, il comporte au moins un étage de commutation constitué d'au moins un commutateur élémentaire comportant :

- des moyens pour router un paquet vers au moins une sortie de ce commutateur élémentaire, en fonction du contenu d'une étiquette de routage interne associée à ce paquet;
- des moyens pour réémettre un paquet plusieurs fois successivement, au moins sur la sortie où il a été routé, le nombre de fois étant fonction du contenu d'une étiquette de routage interne associée à cet paquet.

Le réseau ainsi caractérisé permet de réaliser une diffusion soit spatiale, soit temporelle, sans nécessiter une structure beaucoup plus complexe que celle d'un réseau ne permettant que des connexion de point à point, grâce au fait que tous les étages sauf éventuellement le premier et le dernier étage de commutation remplissent une double fonction : multiplication d'un paquet reçu de l'étage situé en amont, et simultanément routage de plusieurs exemplaires d'un paquet ayant été multiplié par un étage en amont.

Si les moyens pour réémettre un paquet plusieurs fois successivement ne peuvent le faire que sur une même sortie où le paquet a été préalablement routée, le premier étage ne peut réaliser que la fonction de multiplication, lorsqu'il s'agit de diffuser un paquet, car il ne reçoit pas de paquets ayant déjà été multipliés par un étage situé en amont. Pour réaliser la diffusion spatiale le dernier étage ne peut remplir que la fonction de routage, car s'il multipliait des paquets, ceux-ci sortiraient en série sur une même sortie, puisque il n'y a pas d'autres étages en aval pour assurer un routage des différents exemplaires vers des destinations distinctes.

Selon un mode de réalisation particulier, les moyens pour router et les moyens pour réémettre ont en outre la capacité de réémettre plusieurs fois un même paquet sur des sorties différentes. Le réseau ainsi caractérisé peut avoir une structure encore plus simple que dans le cas précédent, car le premier étage et le dernier étage de commutation peuvent alors, eux aussi, remplir les deux fonctions simultanément: routage et multiplication. Il est donc envisageable de réduire encore le nombre d'étages de commutation.

Selon un mode de réalisation particulier, le réseau selon l'invention comporte en outre des moyens pour déterminer une étiquette de routage interne en fonction de données reçues pendant une phase de signalisation préalable à l'établissement de chaque connexion de diffusion.

L'invention sera mieux comprise et d'autres caractéristiques apparaîtront à l'aide de la description ci-dessous et des figures l'accompagnant :

- la figure 1 représente le schéma synoptique général d'un exemple de réalisation du réseau de connexion selon l'invention;
- la figure 2 représente le schéma synoptique d'une partie de cet exemple de réalisation;
- la figure 3 représente le format d'une étiquette de routage interne qui est associée à une cellule lorsqu'elle est destinée à être diffusée vers plusieurs sorties du réseau de connexion;
- les figures 4 et 5 illustrent respectivement deux exemples de diffusion d'une cellule, dans deux variantes de réalisation du réseau de connexion selon l'invention;
- la figure 6 représente le schéma synoptique plus détaillé d'un exemple de réalisation d'une partie d'un réseau de connexion selon l'invention;

- la figure 7 représente le schéma synoptique plus détaillé d'une autre partie de cet exemple de réalisation.

La réalisation du réseau selon l'invention est particulièrement simple lorsque les paquets ont une longueur fixe, c'est notamment le cas des cellules conforme à la norme de transfert en mode asynchrone.

La réalisation du réseau selon l'invention est particulièrement simple lorsque les paquets ont une longueur fixe, c'est notamment le cas des cellules conforme à la norme de transfert en mode asynchrone.

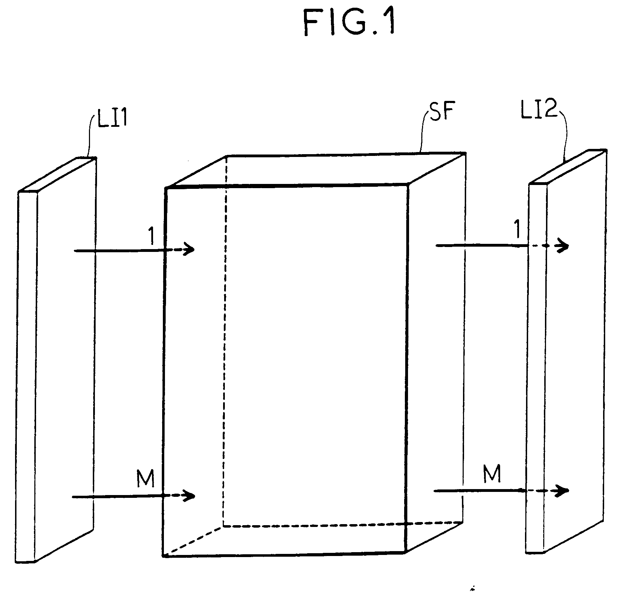

Un exemple de réalisation du réseau de connexion selon l'invention peut avoir le schéma synoptique général qui est représenté sur la figure 1 et qui est un schéma synoptique classique pour un réseau de connexion à large bande.

Il comprend : une interface d'entrée de liaisons, LI1; un équipement de commutation SF, ayant M entrées et M sorties; et une interface de sortie de liaisons, LI2. L'interface LI1 possède M sorties, numérotées de 1 à M sur la figure, reliées respectivement à M entrées de l'équipement de commutation SF; et possède M entrées non représentées, constituant les entrées du réseau de connexion. L'interface LI2 possède M entrées, numérotées de 1 à M sur la figure, reliées respectivement à M sorties de l'équipement de commutation SF; et possède M sorties non représentées, constituant les sorties du réseau de connexion.

Chaque entrée reçoit et chaque sortie émet, avec un débit fixe pouvant atteindre 2,6 Gb/s, des paquets d'informations ayant une longueur fixe, par exemple au format normalisé pour le mode de transfert asynchrone.

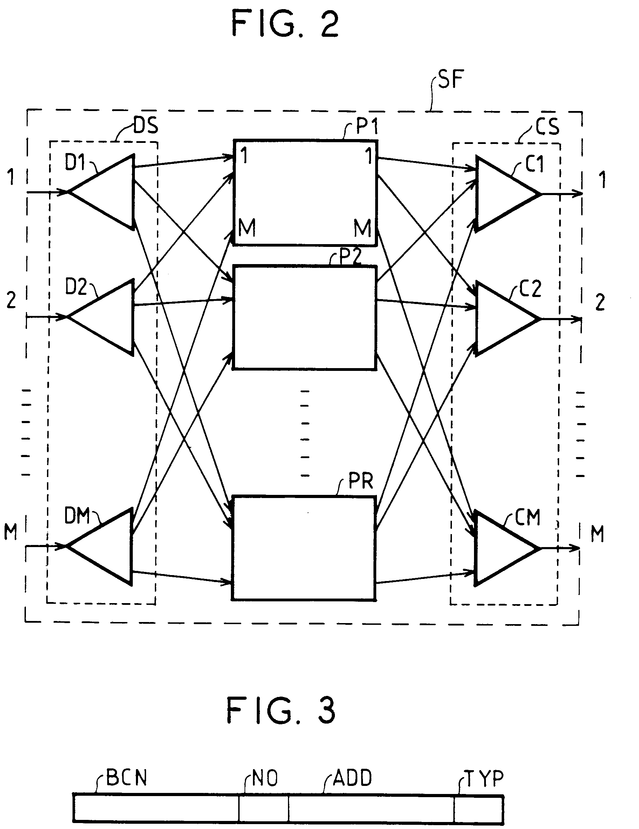

La figure 2 représente le schéma synoptique de l'équipement de commutation SF, de l'exemple de réalisation représenté sur la figure 1. Cet équipement SF comporte de manière classique: R plans de commutation P1, ..., PR qui sont identiques entre eux et qui comportent chacun M entrées et M sorties; un étage sélecteur DS placé en entrée de l'équipement SF pour répartir le trafic entre les R plans; et un étage concentrateur CS placé en sortie pour collecter des différents plans toutes les cellules destinées à une même sortie du réseau de connexion. L'étage sélecteur DS comporte M sélecteurs D1, ..., DM ayant chacun une entrée constituant l'une des M entrées de l'équipement SF et ayant R sorties reliées respectivement à une entrée de l'un des plans de commutation P1, ..., PR. L'étage concentrateur CS comporte M concentrateurs optiques C1, ..., CM ayant chacun: R entrées reliées respectivement à une sortie de l'un des plans de commutation P1, ..., PR, et une sortie constituant l'une des M sorties de l'équipement. Chacun des plans P1, ..., PR est constitué de plusieurs étages de commutateurs élémentaires dont un exemple de réalisation sera décrit plus loin.

Chacun de ces commutateurs élémentaires a la capacité de router automatiquement une cellule en fonction du contenu d'une étiquette de routage interne associée à cette cellule. Cette étiquette de routage interne est déterminée à l'entrée de chaque commutateur élémentaire, en fonction de données reçues à l'avance par ce commutateur élémentaire.

Si la connexion nécessite une phase de signalisation préalable, notamment les connexions de diffusion, ces données sont stockées dans des mémoires de routage situées respectivement dans les commutateurs élémentaires.

Si la connexion ne nécessite pas de phase de signalisation, notamment les connexions pour des cellules isolées transmises de point à point, ces données sont stockées dans ces mêmes mémoires de routage, lors de mises à jour des chemins de routage.

La figure 3 représente un exemple de format pour l'étiquette de routage interne dans le cas d'une cellule destinée à être diffusée. Un champ de 2 bits, TYP, indique le type de cellule : cellule vide, ou cellule de test, ou cellule de communication point à point, ou cellule de communication d'un point à plusieurs points (diffusion). Un champ de L bits, ADD, contient une adresse représentant la destination de la cellule. Dans le cas d'une cellule d'une communication de diffusion, l'étiquette de routage comporte en outre un champ de k bits, NO, appelé facteur de multiplication, indiquant le nombre d'exemplaires de la cellule qui doivent être émis sur des sorties du réseau de connexion; et un champ de h bits, BCN, appelé numéro de canal de diffusion, et qui représente la source d'où proviennent toutes les cellules appartenant à un même canal de diffusion. Naturellement ce format d'étiquette de routage interne peut être modifié en fonction de la structure du réseau de connexion, par exemple en augmentant le nombre k de bits du champ NO pour permettre d'indiquer un nombre d'exemplaires aussi grand que le nombre de sorties que comporte le réseau de connexion ;

et en augmentant h pour permettre de désigner un plus grand nombre de canaux de diffusion.

Le contenu du champ NO et celui du champ BCN sont différents pour les commutateurs élémentaires constituant les étages d'un plan de commutation P1, ..., PR.

Les connexions de diffusion étant destinées à transporter un traffic de longue durée, tel que des signaux vocaux ou des transferts de fichiers, une congestion d'un commutateur élémentaire pourrait arriver si le temps disponible était insuffisant pour retransmettre les cellules à diffuser. Cette congestion peut être évitée en limitant la valeur du débit binaire Bb de chaque connexion de diffusion. Cette limitation assure qu'il y a au plus j cellules de diffusion successives transmises au cours d'un même intervalle temporel et mises en séries dans les files d'attente d'un commutateur élémentaire, où j est le nombre d'exemplaires d'une même cellule, émis par un commutateur élémentaire, j étant inférieur ou égal à $2^k$.

Considérons le cas (le plus contraignant) où tous les exemplaires d'une cellule sont émis sur une même sortie du commutateur élémentaire ayant produit ces exemplaires.

Une connexion de diffusion ne peut être acceptée, durant la phase d'établissement, que si le débit binaire Bb de cette connexion de diffusion et le débit binaire B1 de chaque liaison d'un commutateur élémentaire vérifient la relation :

$$Bb \leq \frac{B1}{j}$$

Si cette relation n'était pas vérifiée, un commutateur élémentaire pourrait être congestionné par toutes les cellules produites par le processus de diffusion. En pratique, le nombre j d'exemplaires d'une même cellule émis par un commutateur élémentaire est limité à $2^k$, puisque le format de l'étiquette de routage interne ne comporte que k bit. Naturellement, k est choisi tel que j est inférieur ou égal au nombre N de sorties d'un commutateur élémentaire.

Par exemple, le débit Bb doit être limité à 350 Mb/s si le débit de chaque liaison d'un commutateur élémentaire est B1 = 2,6 Gb/s, et si j = 8.

Enfin, il y a une relation entre la capacité de diffusion d'un réseau de connexion et la structure multi-étages de ce réseau.

Considérons le cas où les exemplaires d'une cellule produits dans l'un des commutateurs élémentaires sont émis en série sur une même sortie du commutateur élémentaire, puis sont routés par les étages situés en aval. Le facteur de multiplication total d'un réseau de connexion est alors limité à $J = j^{s-1}$, dans une structure comportant S étages, avec évidemment une limitation de J, le nombre total d'exemplaires, par la valeur M du nombre de sorties du réseau de connexion. Pour que les exemplaires d'une même cellule puissent atteindre, si nécessaire, toutes les M sorties du réseau de connexion, le nombre d'étages doit satisfaire la relation suivante :

$$S \geq 1 + \log_k M$$

Cette relation est indépendante de la structure des interconnexions entre les étages, qui doit seulement garantir une complète accessibilité.

Considérons le cas où les exemplaires d'une cellule produits dans l'un des commutateurs élémentaires peuvent être émis par différentes sorties de ce commutateur élémentaire. Une connexion de diffusion ne peut être acceptée, durant la phase d'établissement, que si le débit binaire Bb de cette connexion et le débit binaire B1 de chaque liaison d'un commutateur élémentaire vérifient la relation :

$$Bb \leq B1 - \tau$$

où $\tau$ est déterminé dynamiquement pendant la phase de signalisation, en fonction de la charge courante des commutateurs élémentaires.

Le facteur de multiplication total d'un réseau de connexion est limité à :

$$J = j^s$$

Le nombre d'étages doit satisfaire la relation :

$$S \geq \log_k M$$

Il est à noter que, dans le réseau de connexion selon l'invention, la limitation du débit binaire d'une connexion est essentiellement imposée par la capacité de chaque commutateur élémentaire, parce que la congestion se produit à l'intérieur d'un seul commutateur élémentaire. Elle se produit lorsque plusieurs exemplaires sont émis sur une même sortie de ce commutateur.

Dans le commutateur situé en aval, il n'y a pas forcément une congestion car chaque exemplaire est destiné à une sortie différente de ce commutateur.

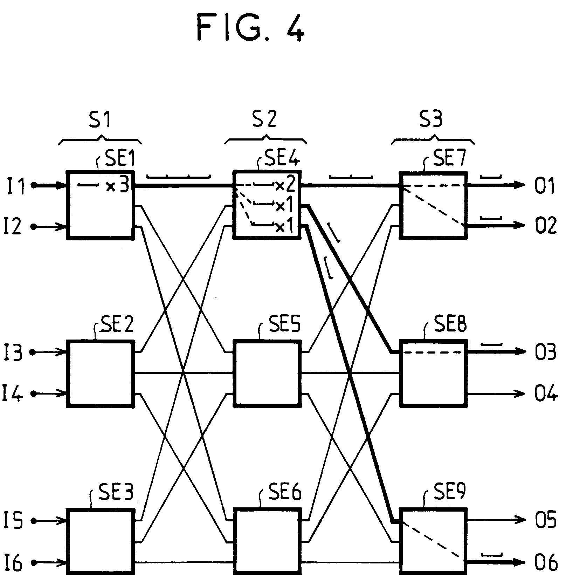

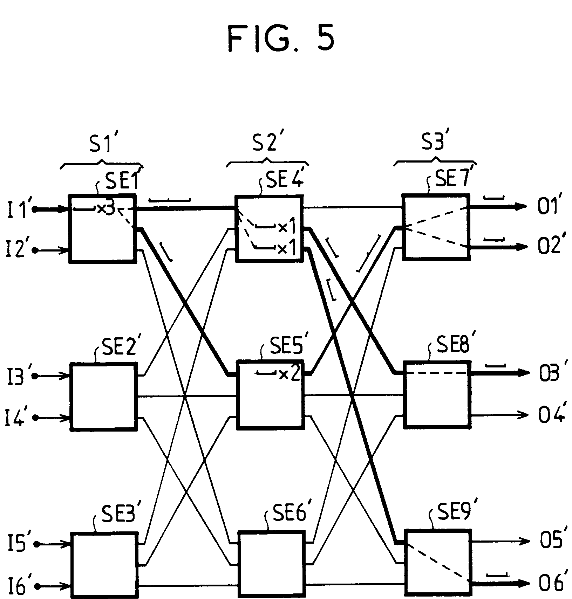

Les figures 4 et 5 illustrent respectivement deux exemples de diffusion d'une cellule dans deux variantes de réalisation d'un plan de commutation non bloquant. Le plan de commutation considéré dans le premier exemple comporte neuf commutateurs élémentaires SE1, ..., SE9 répartis en trois étages S1, S2, S3. Le premier étage S1 comporte trois commutateurs identiques SE1, SE2, SE3 ayant deux entrées et trois sorties. Ces entrées constituent les entrées I1,...,I6 du plan de commutation non bloquant. Le deuxième étage comporte trois commutateurs élémentaires SE4, SE5, SE6 comportant chacun trois entrées reliées respectivement à l'une des sorties des commutateurs élémentaires du premier étage S1 et trois sorties reliées à une entrée de chacun des commutateurs élémentaires du troisième étage S3. Le troisième étage S3 comporte trois commutateurs identiques SE7, SE8, SE9 ayant chacun trois entrées reliées respectivement à une sortie de chacun des commutateurs élémentaires du deuxième étage S2, et deux sorties constituant les sorties du plan de commutation: 01,...,06.

L'exemple de réalisation de plan de commutation représenté sur la figure 4 comporte des commutateurs élémentaires SE1,...,SE9 fonctionnant selon le procédé suivant: une cellule qui est appliquée à une entrée subit une conversion de longueur d'onde en fonction de sa destination. Puis elle est stockée dans une mémoire tampon. Enfin, elle est réémise sur une sortie munie d'un filtre ayant une longueur d'onde d'accord égale à celle de cette cellule. Une multiplication des exemplaires de la cellule peut être réalisée en lisant plusieurs fois la même cellule dans la mémoire tempon. Il en résulte que tous les exemples produits par le commutateur, pour une cellule donnée, ont obligatoirement la même longueur d'onde.

Les filtres de sortie des commutateurs SE1,...,SE9 de la figure 4 sont à accord fixe. par conséquent des exemplaires d'une même cellule, produits dans le commutateur considéré, doivent obligatoirement être émis en série par une même sortie de ce commutateur, car ils ont tous la même longueur d'onde. Par contre, des exemplaires de la même cellule, produits par différents commutateurs élémentaires situées en amont du commutateur élémentaire considéré, peuvent avoir des longueurs d'onde distinctes, et peuvent donc être émis sur des sorties distinctes du commutateur élémentaire considéré. Autrement dit un commutateur élémentaire SE1,...,SE9, ne peut pas réaliser une multiplication puis un routage sur une même cellule. Il faut que ces deux opérations soient réalisées par deux étages successifs.

Ceci n'empêche pas qu'un même étage peut réaliser à la fois la multiplication et le routage pour des exemplaires de deux cellules distinctes: Il peut multiplier, sans la router, une première cellule déjà multipliée, ou non, par un étage en amont; et router plusieurs exemplaires d'une deuxième cellule qui a été précédemment multipliée dans un étage en amont, puisqu'il peut alors leur attribuer des longueurs distinctes.

Dans l'exemple représenté sur la figure 4 une cellule appliquée à l'entrée I1 du plan de commutation doit être diffusée en quatre exemplaires vers les sorties O1, O2, O3 et O6 du plan de commutation. Le champ NO de l'étiquette de routage interne initialement associée à la cellule contient la valeur quatre, et le champ ADD désigne les sorties O1, O2, O3, O6.

Dans cet exemple, le commutateur élémentaire SE1 route la cellule vers sa première sortie puis la réémet trois fois successivement. Le commutateur SE4 du deuxième étage S2 reçoit ces trois exemplaires successifs, route le premier exemplaire vers sa première sortie, puis le réémet deux fois successivement; route le deuxième exemplaire vers sa deuxième sortie, puis le réémet une seule fois; et route le troisième exemplaire vers sa troisième sortie, puis le réémet une seule fois.

Le commutateur élémentaire SE7 de l'étage S3 reçoit successivement deux exemplaires de la cellule, les routes respectivement vers ces deux sorties qui constituent les sorties O1 et O2 du plan de commutation, puis réémet une seule fois chaque exemplaire. Le commutateur élémentaire SE8 de l'étage S3 reçoit un exemplaire fourni par SE4, le route vers sa première sortie qui constitue la sortie O3 du plan de commutation, puis le réémet une seule fois. Le commutateur SE9 de l'étage S3 reçoit un exemplaire fourni par SE4, le route vers sa deuxième sortie qui constitue la sortie O6 du plan de commutation, puis il le réémet une seule fois sur cette sortie.

Il apparaît donc qu'une fonction de multiplication seulement est réalisée dans l'étage S1 et dans l'étage S2; et qu'une fonction de routage est réalisée dans l'étage S2 et dans l'étage S3. Plus précisément, l'étage S2 réalise l'opération de routage et l'opération de multiplication sur des cellules distinctes. Il route, c'est-à-dire achemine vers des sorties différentes des exemplaires d'une même cellule ayant été créés sur une même sortie d'un étage en amont. Il multiplie, c'est-à-dire créé plusieurs exemplaires d'une cellule, mais sans les router, en réémettant plusieurs fois la même cellule sur une même sortie. Le fonctionnement décrit dans cet exemple nécessite donc qu'il ait au moins un étage intermédiaire tel que S2, comportant des commutateurs élémentaires capables de réaliser un routage et une multiplication de cellules.

La figure 5 illustre un exemple où le fonctionnement est différent, bien que le schéma synoptique du plan de commutation soit le même que sur la figure 4, et bien que le résultat final soit identique, c'est-à-dire la diffusion d'une cellule de l'entrée I1' vers les sorties O1', O2', O3' et O6'.

Le plan de commutation représenté sur la figure 5 comporte des commutateurs élémentaires SE1',...,SE9' disposés selon le même schéma synoptique que celui représenté sur la figure 4. Ils fonctionnent selon un procédé un peu différent de celui des commutateurs SE1,...SE9, car leurs filtres de sortie sont supposés accordables électriquement. Par conséquent, plusieurs exemplaires d'une même cellule, ayant été produits dans le commutateur considéré et ayant donc une même longueur d'onde, peuvent être routés vers plusieurs sorties différentes choisies parmi les sorties du commutateur élémentaire considéré. Autrement dit, un même commutateur élémentaire peut multiplier les exemplaires d'une cellule puis les router vers différentes sorties.

Dans cet exemple, le commutateur élémentaire SE1' de l'étage S1' reçoit la cellule à diffuser et réalise tout d'abord une multiplication de cette cellule puis un routage. Plus précisément, il crée trois exemplaires de la cellule originale puis route deux de ces exemplaires vers sa première sortie, et le troisième exemplaire vers sa deuxième sortie.

Le deuxième étage S2' réalise une fonction de routage puis une fonction de multiplication, comme dans l'exemple de la figure 4. Le commutateur SE4' reçoit successivement deux exemplaires qu'il route vers sa deuxième et sa troisième sortie respectivement, et les réémet une seule fois sur chacune des ces sorties. Le commutateur élémentaire SE5 de l'étage S2' reçoit un exemplaire de la cellule, le route vers sa première sortie puis le réémet deux fois successivement sur cette première sortie. Cette première sortie est reliée à la seconde entrée du commutateur SE7' de l'étage S3'. Le commutateur SE7' route les deux exemplaires respectivement vers ses deux sorties puis les réémet une seule fois sur ces deux sorties qui constituent les sorties O1' et O2' du plan de commutation.

Le commutateur élémentaire SE8' de l'étage S3' reçoit un exemplaire fourni par la deuxième sortie du commutateur SE4, le route vers sa première sortie, puis le réémet une seule fois sur cette sortie qui constitue la sortie O3 du plan de commutation. La première entrée du commutateur élémentaire SE9' de l'étage S3' reçoit un exemplaire fourni par la troisième sortie du commutateur SE4, le route vers sa seconde sortie, puis le réémet une seule fois sur cette sortie qui constitue la sortie O6' du plan de commutation.

Pour réaliser ce mode de fonctionnement, il apparaît que les commutateurs SE1', SE2', SE3' du premier étage S1' doivent pouvoir faire tout d'abord une multiplication pour créer des exemplaires supplémentaires de la cellule, puis un routage, alors que les commutateurs SE4', SE5', SE6' du deuxième étage S2 doivent pouvoir réaliser d'abord un routage, puis une multiplication des exemplaires.

L'Homme de l'Art choisira l'un des deux types de fonctionnement décrits ci-dessus en se référant aux figures 4 et 5, en fonction du type de commutateur élémentaire dont il dispose. S'il dispose de commutateurs élémentaires permettant de réaliser le routage et la multiplication seulement dans cet ordre, il fera fonctionner le plan de commutation conformément à la figure 4. S'il dispose de commutateurs élémentaires permettant de réaliser le routage et la multiplication dans cet ordre ou dans l'ordre inverse indifféremment, il choisira un fonctionnement tel que celui illustré par la figure 5 et qui présente l'avantage de permettre éventuellement une réduction du nombre d'étages, puisque le premier étage S1' peut réaliser déjà une partie du routage des exemplaires qu'il crée.

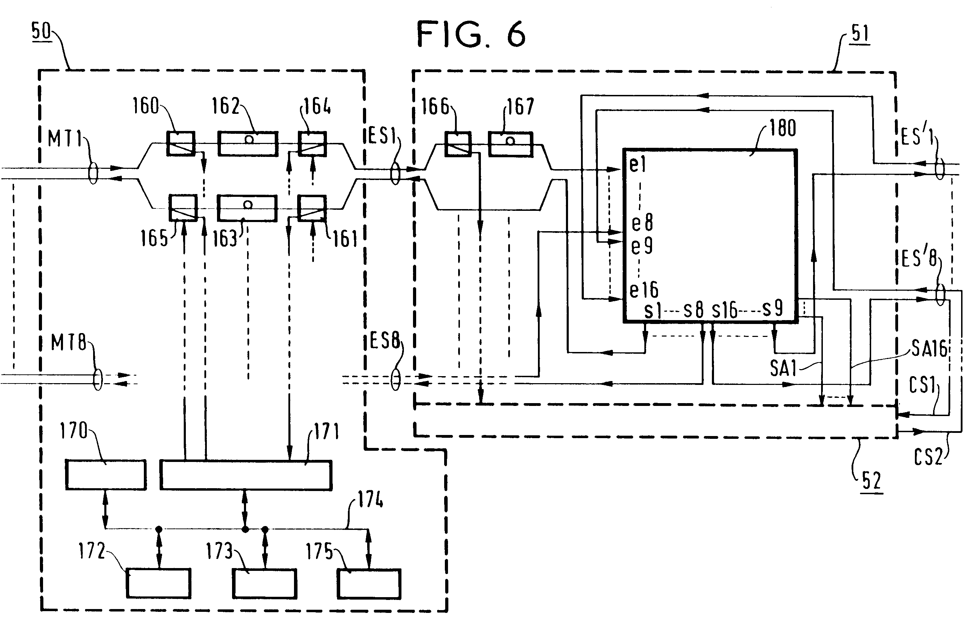

La figure 6 représente le schéma synoptique d'un exemple de réalisation d'un commutateur élémentaire tel que les commutateurs SE1',...,SE9', de la figure 5. Cet exemple de réalisation permet de réaliser le routage et la multiplication des cellules dans un ordre quelconque. Une variante simplifiée décrite plus loin ne permet de réaliser le routage et la multiplication que dans cet ordre, et correspond donc aux commutateurs SE1,...,SE9.

L'exemple représenté comporte : un dispositif 50 qui est un processeur de cellules relié à des fibres optiques supportant respectivement des multiplex temporels asynchrones MT1,...,MT8; une matrice de commutation 51 reliée par des entrées-sorties optiques ES1,...,ES8 au dispositif 50, et reliée par des entrées-sorties optiques ES'1,...,ES'7 à un autre étage, non représenté, du réseau de connexion; et un dispositif de commande 52 qui est associé à la matrice 51.

Une entrée-sortie ES'8 de la matrice 51 est reliée à une entrée-sortie du dispositif 52 par une double liaison CS1, CS2 représentée en pointillés car cette liaison peut passer par l'intermédiaire des dispositifs de commande 52 d'autres commutateurs élémentaires du même plan de commutation, pour permettre l'échange de cellules de commande et de signalisation, entre les dispositifs de commande 52.

La matrice 51 est constituée d'une matrice 180, comportant 16 entrées correspondant aux lignes de la matrice 180, 16 sorties correspondant aux colonnes de la matrice 180, et 16 sorties auxiliaires SA1, ..., SA16. Chaque entrée-sortie ES1, ...ES8 de la matrice 51 est donc constituée d'une entrée et d'une sortie séparées, reliées respectivement à l'une des 16 entrées S1,...,S16 de la matrice 180 et à l'une des 16 sorties S1,...,S16 de la matrice 180. La matrice 51 comporte en outre seize coupleurs à trois accès, et seize lignes à retard, permettant de prélever les bits de commande, notamment quatre bits de routage dans chaque cellule, et de les fournir au dispositif de commande 52.

A titre d'exemple, l'entrée-sortie ES1 est reliée à l'entrée el de la matrice 180 par un coupleur 166 en série avec une ligne à retard 167 qui procure un retard égal au temps de traitement du dispositif 52 pour interpréter les bits de commande de l'étiquette de routage interne. L'entrée-sortie ES1 est reliée en outre, directement, à la sortie s1 de la matrice 180. Un accès du coupleur 166 est relié à une entrée du dispositif de commande 52 dont le schéma synoptique sera détaillé plus loin.

Le dispositif 50 comporte 8 paires de coupleurs à 3 accès, telles que 160, 161; 8 paires de lignes à retard, telles que 162, 163; et 8 paires de coupleurs à trois accès et une entrée de commande électrique, telles que 164, 165. En effet, chaque multiplex bidirectionnel MT1,...,MT8 est acheminé dans le dispositif 50 par deux voies monodirectionnelles, ce qui conduit à doubler les composants de ce dispositif. Le dispositif 50 comporte en outre :

- un microprocesseur 170;
- une interface d'entrée-sortie 171;
- une mémoire de routage 172;
- une mémoire de signalisation 173;
- une mémoire de police 175;
- un bus 174 reliant tous les composants ci-dessus.

Les cellules traversent successivement le coupleur 160, la ligne à retard 162 puis le coupleur 164. Le coupleur 160 est un coupleur passif dont le troisième accès est relié à une entrée de l'interface 171 pour lui transmettre cinq octets constituant l'en-tête normalisée de chaque cellule. La ligne à retard 162 procure un retard égal au temps de traitement de cette en-tête par le microprocesseur 170.

Dans chaque commutateur élémentaire d'un plan de commutation, pour chaque cellule, le microprocesseur 170 et la mémoire de traduction 172 déduisent des informations de routage externe contenues dans l'en-tête normalisée (identificateur de circuit virtuel et identificateur de faisceau virtuel), une étiquette de routage interne telle que celle décrite en référence à la figure 3, en fonction des données contenues dans la mémoire de routage 172.

Le coupleur 164 est un coupleur actif qui permet d'introduire dans la cellule une nouvelle en-tête, en la faisant précéder d'une nouvelle étiquette de routage. Pour cela, le coupleur 164 comporte un troisième accès relié à une sortie optique de l'interface 171 ; et une entrée de commande électrique reliée à une sortie l'interface 171, fournissant un signal électrique de validation. Le coupleur 164 est utilisé en outre pour émettre des cellules de signalisation, ou de maintenance, à la place de cellules vides.

La mémoire de signalisation 173 stocke des cellules de signalisation arrivant ou partant du réseau de connexion 5, par exemple des cellules de signalisation provenant, ou à destination, d'un système de commande du réseau général de télécommunication.

Le dispositif de commande 52 réalise l'établissement de connexions, leur relâchement, ainsi que diverses fonctions de gestion et de maintenance du commutateur élémentaire. Le dispositif 50 remplit les fonctions de protocole, au niveau d'une liaison. Une partie du signal optique arrivant par le multiplex MT1, par exemple, est dérivée par le coupleur 160 alors que le reste de ce signal optique est retardé dans la ligne à retard 162 pour laisser au dispositif 50 le temps de traiter l'en-tête de chaque cellule. L'interface d'entrée-sortie 171 réalise une conversion optique-électrique, et réciproquement, pour permettre l'utilisation de composants électroniques, notamment des mémoires au silicium à double port et à accès rapide.

Le microprocesseur 170 lit les cinq octets de l'en-tête normalisé de chaque cellule, les décode, réalise un contrôle d'erreurs, identifie un circuit virtuel ou un faisceau virtuel, et traduit ces informations en une étiquette de routage interne. L'en-tête de chaque cellule est ensuite mise à jour et l'étiquette de routage interne lui est associée, pour la durée du traitement dans le commutateur élémentaire considéré. L'en-tête mise à jour et l'étiquette de routage interne sont réassociées aux informations constituant la cellule, au moyen du coupleur 164 placé en aval de la ligne à retard 162. Le synchronisme est respecté, de façon à remplacer exactement l'ancienne en-tête par la nouvelle en-tête. L'étiquette de routage interne qui est associée peut être transmise à un rythme plus lent, par exemple 150 Mb/s pour permettre l'utilisation d'un dispositif de commande 52 réalisé en technologie électronique classique.

L'étiquette de routage interne déterminée par le dispositif 50 a un format tel que celui décrit en référence à la figure 3, et comporte par exemple n=16 bits. Le dispositif de commande 52 examine tout d'abord le champ TYP pour déterminer s'il s'agit d'une cellule vide, ou d'une cellule de test,ou d'une cellule à transmettre de point à point, ou d'une cellule à diffuser vers plusieurs points. Une cellule vide est utilisée seulement pour la synchronisation du réseau de connexion, puis est abandonnée. Une cellule de test est toujours acheminée vers une sortie particulière de la matrice 180.

Cette sortie particulière est : soit la sortie s16 qui est relié à l'entrée-sortie ES'8 de la matrice 51, et qui permet de communiquer avec l'un des dispositifs de commande 52 du plan de commutation; soit l'une des sorties auxilliaires SA1, ..., SA16 qui permettent de communiquer directement avec le dispositif de commande 52 qui est associé à la matrice 51 considérée.

Le dispositif de commande 52 a pour fonction d'établir toutes les connexions entre les entrées et les sorties de la matrice 51.

Les dispositifs de commande 52 des différents commutateurs élémentaires d'un même plan du réseau de connexion échangent des cellules de commande. Ces cellules de commande contiennent des informations concernant les demandes de connexion et les acheminements. Elles contiennent aussi des données de commande qui sont utilisées par les microprocesseurs 170 des dispositifs 50 pour déterminer les données stockées dans la mémoire de routage 172 de chaque dispositif 50. Les cellules de commande sont utilisées en outre pour transférer des informations de gestion et de maintenance, par exemple pour éviter une congestion, et pour le test du matériel et du logiciel.

Une cellule contenant des informations à transmettre de point à point est acheminée vers la sortie de la matrice 180 correspondant à la destination de cette cellule, désignée par le champ ADD de l'étiquette de routage interne.

Dans le cas d'une cellule de diffusion, le dispositif 52 lit aussi le champ NO contenant le nombre d'exemplaires devant être réémis, et le champ BCN contenant le numéro du canal de diffusion de cette cellule.

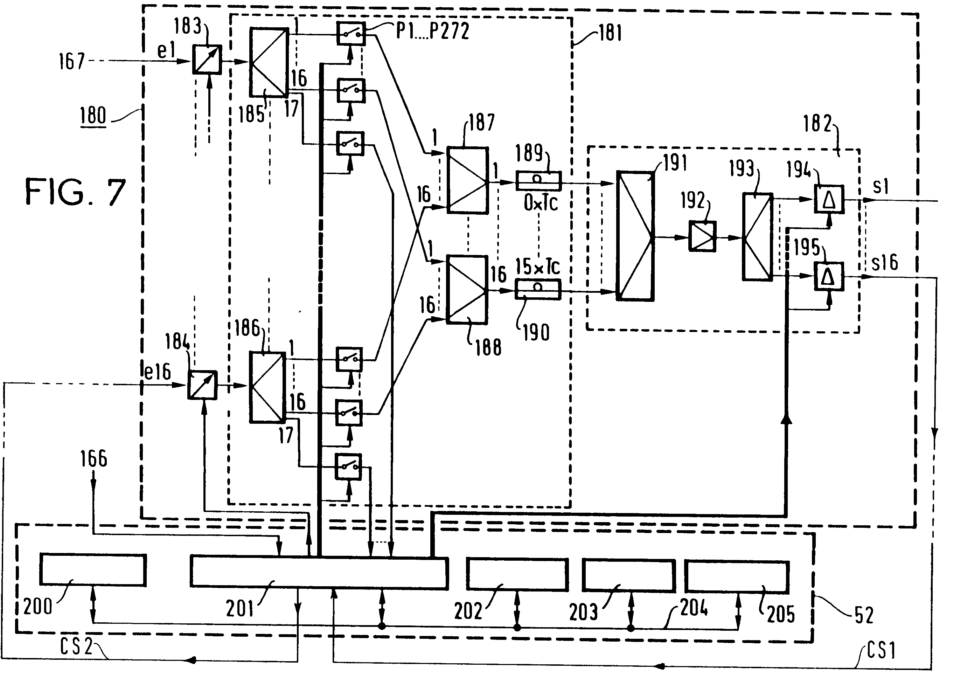

La figure 7 représente un schéma synoptique plus détaillé de la matrice de commutation 180 et du dispositif de commande 52 qui lui est associé. Le dispositif 52 comprend : un micro-processeur 200; une interface d'entrée-sortie, 201; une mémoire de routage, 202; une mémoire de pointeurs, 203; une mémoire de signalisation, 205; et un bus 204 reliant tous ces éléments entre eux. La matrice de commutation 180 comprend : 16 convertisseurs de longueur d'onde 183,..., 184; une mémoire-tampon 181; et un dispositif de commutation spatial 182. Les convertisseurs 183, ..., 184 ont : 16 entrées reliées respectivement aux 16 entrées e1,...,e16 de la matrice 180, 16 sorties reliées respectivement à 16 entrées de la mémoire-tampon 181, et 16 entrées de commande électriques reliées respectivement à des sorties de l'interface 201 du dispositif de commande 52.

Une entrée de l'interface 201 est reliée à la sortie s16 de la matrice 180 liaison CS1, en passant éventuellement par d'autres dispositifs 52, appartenant à d'autres commutateurs élémentaires du même plan. Une sortie de l'interface 201 est reliée par la liaison CS2 à l'entrée e16 de la matrice 180. Ces liaisons sont utilisées pour échanger des cellules de commande et de signalisation concernant les connnexions.

Le dispositif 182 réalise une commutation spatiale pour transférer chaque cellule reçue sur l'une des 16 entrées e1,...,e16 de la matrice 180 vers l'une des 16 sorties s1,...,s16 de cette matrice 180. La mémoire-tampon 181 a pour fonction de retarder les cellules, avant leur transfert dans le dispositif 182, pour résoudre les problèmes de contention, c'est-à-dire de conflit entre deux cellules arrivant simultanément et destinées à une même sortie de la matrice 180. Il est nécessaire de pouvoir retarder dans 16 files d'attente, de type FIFO, des cellules à destination de n'importe laquelle des 16 sorties sl,...,s16. Dans la matrice de commutation 180, les cellules peuvent prendre Q= 16 couleurs différentes au moyen des convertisseurs 183 à 184, et la couleur des cellules permet de distinguer 16 files d'attente correspondant respectivement aux 16 sorties, tout en stockant les cellules dans un jeu de lignes à retard qui est commun pour toutes ces sorties. Ces files d'attente sont gérées par le microprocesseur 200 au moyen de pointeurs stockés dans la mémoire de pointeurs 203.

La valeur de chaque pointeur est comprise entre 0 et Q, où Q est le nombre des lignes à retard que comporte la mémoire 181. Une prochaine cellule à stocker dans une file d'attente donnée sera inscrite dans la ligne à retard de rang q, si le pointeur de cette file est égal à q, et si q est inférieur ou égal à Q. Si q =Q+1 la file est saturée et cette cellule sera perdue, car elle ne peut être inscrite dans la mémoire tampon 181.

Les convertisseurs 183, ..., 184 sont commandés électriquement par le micro-processeur 200, via l'interface 201, en fonction de 6 bits du champ ADD que le dispositif 52 extrait de l'étiquette de routage. Parmi ces six bits, quatre bits représentent le numéro de la sortie à laquelle est destinée la cellule. La couleur donnée à la cellule correspond à cette sortie de la matrice 180.

La mémoire de routage 202 stocke :
- des paramètres de commande des convertisseurs 183,...,184, pour attribuer une couleur à chaque cellule, selon la sortie à laquelle elle est destinée;
- un indicateur pour chaque cellule, indiquant si celle-ci fait partie d'une connexion point à point ou d'une connexion point à multipoints, dans ce dernier cas la mémoire de routage 202 fournissant des paramètres pour accorder une pluralité de filtres en sortie du dispositif 182.

Si Q=15 et N=16, la mémoire-tampon 181 comporte : 16 diffuseurs 185,..., 186; 272 portes optiques P1,...,P272; 16 combineurs 187,..., 188; et 16 lignes à retard 189,..., 190, procurant des retards respectivement égaux à O,Tc, 2Tc, 3Tc,...15Tc, où Tc est la période de cellule. Ces lignes à retard permettent de réaliser pour une cellule quelconque un retard compris entre 0 et 15Tc, indépendamment de la couleur de la cellule. Les diffuseurs 185,..., 186 comportent chacun une entrée constituant respectivement l'une des 16 entrées de la mémoire-tampon 181, et comportent 17 sorties reliées respectivement à l'une des 272 portes optiques P1, ...,P272. Parmi les 17 sorties de chaque diffuseur, 16 sorties sont reliées par ces portes respectivement à une entrée de l'un des 16 combineurs 187,..., 188; et la dix-septième sortie est reliée par une porte à l'une des sorties SA1,...,SA16 de la matrice 180. Cette sortie est reliée à une entrée de l'interface 201 d'entrée-sortie, du dispositif de commande 52.

Cette entrée de l'interface 201 est munie d'un dispositif de conversion optique-électronique, non représenté, et permet au micro-processeur 200 de recevoir le contenu de cellules de signalisation qui sont adressées au dispositif de commande 52 considéré, et qui concernent les connexions passant par la matrice 180 considérée. Chaque entrée de chacun des combineurs 187,...,188 est ainsi reliée par l'une des portes P1,...,P272 à une sortie de l'un des diffuseurs 185,...,186. Ainsi toute cellule arrivant sur l'une quelconque des 16 entrées de la matrice 180 peut transiter par l'un quelconque des 16 combineurs 187,...,188, en ouvrant l'une des portes P1,...,P272, celles-ci étant commandées indépendamment les unes des autres par le microprocesseur 200 via l'interface 201.

Chaque combineur 187, ..., 188 possède une sortie qui est reliée à l'une des lignes à retard 189,...,190. Ainsi le dispositif de commande 52 choisit de retarder, d'un temps compris entre 0 et 15Tc, chacune des cellules arrivant sur l'une des 16 entrées de la matrice 180, en fonction des pointeurs contenus dans la mémoire 203, qui permettent de surveiller le flux de cellules à destination de chacune des 16 sorties, et de savoir quel est le retard attribué à chaque cellule. La mémoire-tampon 181 se comporte comme 16 files d'attente FIFO correspondant aux 16 sorties de la mémoire 180.

Le nombre de cellules stockables dans chaque file d'attente est fixé par le nombre Q des lignes à retard 189,...,190. Dans cet exemple de réalisation, il est égal à seize. L'article "Buffer Sizing in an ATM Switch for both ATM and STM traffics" international Journal of digital and analog Cabled Systems vol 2, 247-252 (1989) montre qu'une mémoire tampon de sortie ayant une capacité de 16 cellules, par sortie, permet d'obtenir un taux de perte de cellules égal à $10^{-10}$. Il est possible d'obtenir un taux de perte donné, en choisissant le nombre Q des lignes à retard 189,...,190.

Dans cet exemple de réalisation, les matrices du réseau de connexion assurent aussi la remise en ordre des cellules à destination d'un concentrateur, leur rang initial étant connu grâce à deux bits de routage parmi les six bits du champ ADD de l'étiquette de routage interne. Pour retrouver leur rang initial, elles doivent être lues dans cet ordre, à l'intérieur de la mémoire-tampon 181. La file d'attente de chaque multiplex de sortie est gérée par le microprocesseur 200, la mémoire de routage 202, et la mémoire de pointeurs 203, comme quatre "sous-files d'attente" indépendantes destinées à stocker respectivement les cellules de rang 1, 2, 3, 4.

Considérons la mise en file d'attente de quatre cellules qui sont à émettre, dans l'ordre C1, C2, C3, C4 sur une sortie donnée de la matrice 181, alors qu'elles sont arrivées à des entrées de la matrice 181 dans l'ordre C2, C1, C4, C3, par exemple. La cellule C2 est inscrite dans la deuxième sous-file d'attente, la cellule C1 est inscrite dans la première sous-file d'attente, la cellule C4 est inscrite dans la quatrième sous-file d'attente, et la cellule C3 est inscrite dans la troisième sous-file d'attente. La sous-file d'attente d'écriture est choisie parmi les quatres sous-files d'attente de la file d'attente correspondant à la sortie donnée, grâce aux 2 bits de routage indiquant le rang de chaque cellule. La sous-file d'attente de lecture est choisie de manière périodique première, puis deuxième, puis troisième, puis quatrième, etc.

Le dispositif de commutation spatial 182 comporte :

- un combineur 191 ayant 16 entrées reliées respectivement aux 16 sorties de la mémoire-tampon 181, constituées, par les sorties des 16 lignes à retard 189,...,190;
- un amplificateur optique 192 amplifiant le signal optique fourni par une sortie du combineur 191;
- un diffuseur 193 ayant une entrée reliée à l'amplificateur 192, et 16 sorties;
- 16 filtres 194,..., 195 ayant chacun : une entrée reliée respectivement à une sortie du diffuseur 193; une entrée de commande électrique reliée à une sortie de l'interface 201 et sélectionnant une couleur parmi 16; et une sortie constituant l'une des 16 sorties s1,...,s16 de la matrice de commutation 180.

Le combineur 191, l'amplificateur 192, et le diffuseur 193 permettent d'appliquer toutes les cellules sortant de la mémoire-tampon 181 aux 16 filtres 194,...,195. Chaque filtre ne laisse passer que la couleur sélectionnée par le signal électrique de commande que fournit le dispositif de commande 52 pour chaque période de cellule. Généralement ils sont commandés pour filtrer chacun une couleur différente, pour acheminer une cellule d'un point à un autre point unique.

Dans certains cas, par exemple, pour diffuser un message simultanément vers plusieurs destinataires, ces filtres peuvent être commandés pour filtrer une même couleur dans plusieurs filtres correspondant à plusieurs destinataires pour une même cellule.

Pour créer plusieurs exemplaires d'une même cellule celle-ci est stockée plusieurs fois, avec une même longueur d'onde, respectivement dans les queues de plusieurs sorties. Pour router ces exemplaires vers ces sorties, les fréquences d'accord des filtres 194,..., 195 correspondant à ces sorties sont toutes réglées sur la longueur d'onde de cette cellule, au moment où ces sorties sont respectivement disponibles pour émettre ces exemplaires. Le fonctionnement du plan de commutation est alors celui décrit en se référant à la figure 5.

Une variante de réalisation consiste à remplacer les filtres 154,...,195, accordables électriquement, par des filtres à accord fixe, plus simples à réaliser. Dans ce cas, tous les exemplaires d'une même cellule, créés dans la matrice 180, sortent obligatoirement en série par un même filtre 194,...195, et donc sur une même sortie s1,...,s16. Le fonctionnement du plan de commutation est alors celui illustré à la figure 4.

Les exemples de réseau décrits ci-dessus acheminent des paquets d'informations ayant un format conforme à la norme du mode de transfert asynchrone, mais le réseau selon l'invention est compatible avec tout autre type de paquet d'informations, ayant une longueur fixe ou non. Le réseau selon l'invention est compatible aussi avec une architecture à un seul plan de commutation.

## Revendications

1) Réseau de connexion photonique pour acheminer des paquets d'informations, entre une pluralité d'entrées et une pluralité de sorties, comportant au moins un étage de commutation (S1, S2, S3) constitué d'au moins un commutateur élémentaire (SE1,..., SE9) ayant la capacité d'acheminer un paquet en fonction d'une étiquette de routage interne associée à ce paquet;

caractérisé en ce que pour diffuser un paquet d'une entrée vers plusieurs sorties du réseau de connexion, il comporte au moins un étage de commutation (S2) constitué d'au moins un commutateur élémentaire (SE4, SE5, SE6) comportant:

- des moyens (P1,...P271, 200, 201) pour router un paquet vers plusieurs sorties de ce commutateur élémentaire, en fonction du contenu d'une étiquette de routage interne associée à cet paquet;
- des moyens (P1,...P271, 200, 201) pour réémettre un paquet plusieurs fois successivement, au moins sur la sortie où il a été routé, le nombre de fois étant fonction du contenu d'une étiquette de routage interne associée à ce paquet.

2) Réseau selon la revendication 1, caractérisé en ce que les moyens (P1,..., P271, 200, 201) pour router et pour réémettre ont en outre la capacité de réémettre plusieurs fois un même paquet sur des sorties différentes, du commutateur élémentaire considéré.

3) réseau selon la revendication 1, caractérisé en ce que ledit commutateur élémentaire (SE4, SE5, SE6) comporte en outre des moyens (50) pour déterminer une étiquette de routage interne en fonction de données reçues pendant une phase de signalisation préalable à l'établissement de chaque connexion de diffusion.

# FIG.1

LI1  SF  LI2

1

M  M

1

# FIG. 2

# FIG. 3

# FIG. 4

# FIG. 5

FIG. 6

FIG. 7